# DEMANDE DE BREVET EUROPEEN

(11) **EP 4 223 604 A1**
(43) Date de publication de la demande: **09.08.2023**
(21) Numéro de dépôt: 23152679.9
(22) Date de dépôt: 20.01.2023
(51) Int. Cl.: B60W 30/09

(54) **PROCÉDÉ DE DÉTECTION DE DANGER DANS L'ENVIRONNEMENT D'UN VÉHICULE AUTOMOBILE**

(30) Priorité: 04.02.2022 FR 2201004
(71) Demandeur: Renault s.a.s, 92100 Boulogne Billancourt (FR)
(72) Inventeur: ZALMAI, Nour, 78084 Gyuancourt cedex (FR)

(57) **Abrégé**

L'invention concerne un procédé de détection d'un danger dans l'environnement d'un véhicule automobile (10), comportant des étapes de :
- détection d'objets (20),
- acquisition de données caractérisant la position et la dynamique du véhicule automobile et de chaque objet,
- détermination de trajectoires prévisionnelles (11, 21) du véhicule automobile et de chaque objet,
- pour chaque objet dont la trajectoire prévisionnelle coupe celle du véhicule automobile, calcul, en fonction des données acquises, d'une valeur de durée-avant-collision.

## Description

### Domaine technique de l'invention

La présente invention concerne de manière générale les aides à la conduite de véhicules automobiles.

Elle concerne plus particulièrement un procédé de détection d'un danger dans l'environnement d'un véhicule automobile.

Elle concerne aussi un procédé de pilotage d'un véhicule permettant d'éviter un tel danger de façon autonome.

Elle concerne également un véhicule automobile équipé d'un calculateur adapté à mettre en oeuvre un tel procédé.

### Etat de la technique

Dans un souci de sécurisation des véhicules automobiles, on équipe actuellement ces derniers de systèmes d'aide à la conduite voire de systèmes de conduite hautement automatisés.

Parmi ces systèmes, on connait notamment les systèmes de freinage d'urgence automatique (plus connu sous l'abréviation AEB, de l'anglais « Automatic Emergency Braking »), conçus pour éviter toute collision avec des obstacles situés dans la voie empruntée par le véhicule, en agissant simplement sur le système de freinage conventionnel du véhicule automobile.

On connaît également les systèmes d'évitement automatique (plus connu sous l'abréviation AES, de l'anglais « Automatic Evasive Steering » ou « Automatic Emergency Steering ») qui permettent d'éviter l'obstacle en déviant le véhicule de sa trajectoire, en agissant sur la direction du véhicule.

Pour que ces fonctions soient efficaces et ne s'activent qu'en cas de besoin, il convient de décrypter de façon fiable l'environnement du véhicule automobile.

Un paramètre généralement utilisé à cet effet est appelé durée-avant-collision (ou en anglais, « Time-to-collision TTC »). Ce paramètre, dont la valeur est calculée pour chaque objet détecté dans l'environnement du véhicule, permet de déterminer dans combien de temps il est possible que le véhicule vienne percuter cet objet. Si cette durée-avant-collision passe sous un seuil prédéterminé, il convient alors d'activer l'une ou l'autre des deux fonctions précitées.

Le calcul de cette durée-avant-collision s'avère alors particulièrement important. Il est donc réalisé en boucle, à pas de temps réduit (par exemple tous les 40 ms).

Le calcul de la valeur de la durée-avant-collision peut être réalisé de diverses manières. L'idée est de calculer une approximation de cette durée afin de minimiser la charge de calcul requise. En effet, les valeurs de durée-avant-collision doivent être calculées pour tous les objets en moins de 40 ms.

Le calcul peut alors par exemple être réalisé en simplifiant le comportement dynamique des objets détectés et du véhicule automobile (c'est-à-dire par exemple en considérant que chaque objet détecté évolue à vitesse constante).

Toujours pour minimiser la charge de calcul requise, le calcul de l'évolution prévisionnelle de la trajectoire du véhicule automobile et de chaque objet détecté est réalisé sur une période de temps restreinte, par exemple de 4 secondes, avec un pas d'échantillonnage réduit, par exemple de 0,1 seconde.

En résumé, le temps de calcul total des durées-avant-collision dépend du nombre d'objets détectés, du modèle employé, du pas d'échantillonnage utilisé et de la période de temps considérée.

Les fonctionnalités AEB et AES étant par nature critique, la réactivité s'avère primordiale.

Il est donc courant de d'embarquer dans chaque véhicule un calculateur ayant une grande puissance de calcul afin de s'assurer que ce critère de réactivité soit toujours satisfait.

L'inconvénient majeur de cette solution est que l'usage de tels calculateurs s'avère onéreux.

### Présentation de l'invention

Afin de remédier à l'inconvénient précité de l'état de la technique, la présente invention propose de réduire la puissance de calcul nécessaire en limitant le nombre d'objets pour lesquels il convient de calculer une valeur de durée-avant-collision.

Plus particulièrement, on propose selon l'invention un procédé de détection d'un danger dans l'environnement d'un véhicule automobile, comportant des étapes de :
- acquisition de données caractérisant la position et la dynamique du véhicule automobile,
- détection d'objets situés dans l'environnement du véhicule automobile,
- acquisition de données caractérisant la position et la dynamique de chaque objet détecté,
- détermination de trajectoires prévisionnelles du véhicule automobile et de chaque objet détecté en fonction des données acquises, et
- uniquement pour chaque objet détecté dont la trajectoire prévisionnelle croise la trajectoire prévisionnelle du véhicule automobile, calcul par un calculateur du véhicule automobile, en fonction des données acquises, d'une valeur de durée-avant-collision relative au temps nécessaire pour que ledit objet et le véhicule automobile se percutent.

Ainsi, l'invention propose de calculer la durée-avant-collision non plus pour chacun des objets détectés, mais uniquement pour ceux dont la trajectoire s'avère potentiellement dangereuse, compte tenu de la trajectoire du véhicule automobile et de celle de l'objet.

De cette manière, le procédé permet de réaliser un filtrage amont des objets détectés afin de ne retenir que ceux qui sont potentiellement dangereux pour le véhicule automobile.

Cette solution s'avère efficace pour réduire la puissance de calcul nécessaire, notamment lorsqu'un grand nombre d'objets se trouvent dans l'environnement du véhicule automobile.

Autrement formulé, à l'étape de calcul, la valeur de durée-avant-collision est calculée uniquement si la trajectoire prévisionnelle dudit au moins un objet détecté croise la trajectoire prévisionnelle du véhicule automobile.

D'autres caractéristiques avantageuses et non limitatives du procédé conforme à l'invention, prises individuellement ou selon toutes les combinaisons techniquement possibles, sont les suivantes :
- à l'étape de détermination, le véhicule automobile et chaque objet détecté sont modélisés sous la forme de figures géométriques, et chacune des trajectoires prévisionnelles est modélisée par deux lignes passant par deux côtés opposés de la figure géométrique correspondante ;
- les figures géométriques sont des rectangles ;
- la trajectoire prévisionnelle de chaque objet détecté est considérée comme croisant la trajectoire prévisionnelle du véhicule automobile si l'une au moins des deux lignes de la trajectoire prévisionnelle du véhicule automobile intersecte l'une au moins des deux lignes de la trajectoire prévisionnelle de l'objet ;
- lesdites deux lignes comprennent des droites parallèles ou segments de droites parallèles, ou bien des cercles coaxiaux ou arcs-de-cercles coaxiaux, selon les données acquises ;
- si les deux lignes comprennent des segments de droites parallèles, les segments de droites présentent une longueur qui dépend de la vitesse du véhicule automobile ou de l'objet correspondant ;
- si les deux lignes comprennent des arcs-de-cercles coaxiaux, les arcs-de-cercles s'étendent sur un secteur angulaire qui dépend de la vitesse du véhicule automobile ou de l'objet correspondant.

L'invention propose également un procédé de pilotage d'un véhicule automobile, comportant :
- une première opération au cours de laquelle un calculateur du véhicule automobile met en oeuvre un procédé de détection tel que précité, puis, si la plus petite des valeurs de durée-avant-collision calculées passe sous un seuil prédéterminé,
- une seconde opération d'activation d'au moins un actionneur du véhicule automobile afin d'éviter que le véhicule automobile ne percute l'objet associé à la plus petite des valeurs de durée-avant-collision calculées.

Préférentiellement, au cours de la seconde opération, il est prévu de calculer une trajectoire d'évitement dudit objet, ledit actionneur permettant alors de contrôler la direction du véhicule automobile.

L'invention propose aussi un véhicule automobile comportant des roues, des moyens de freinage des roues équipés d'un premier actionneur, un système de direction comportant un deuxième actionneur adapté à contrôler l'orientation d'une partie au moins des roues, lesdits actionneurs étant commandés par un calculateur qui est adapté à mettre en oeuvre un procédé de pilotage tel que précité.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

La description qui va suivre en regard des dessins annexés, donnés à titre d'exemples non limitatifs, fera bien comprendre en quoi consiste l'invention et comment elle peut être réalisée.

Sur les dessins annexés :
[Fig.1] est une vue de dessus d'un véhicule automobile et d'un véhicule tiers, roulant selon des trajectoires rectilignes non parallèles ;
[Fig.2] est une vue de dessus du véhicule automobile et du véhicule tiers, roulant respectivement selon des trajectoires rectiligne et circulaire ;
[Fig.3] est une vue de dessus du véhicule automobile et du véhicule tiers, roulant respectivement selon des trajectoires circulaire et rectiligne ;
[Fig.4] est une vue de dessus du véhicule automobile et du véhicule tiers, roulant selon des trajectoires circulaires ;
[Fig.5] est une vue de dessus du véhicule automobile et de deux véhicules tiers, roulant selon des trajectoires rectilignes et parallèles, le long d'un accotement où sont garés d'autres véhicules tiers ;
[Fig.6] est un schéma-bloc illustrant différentes étapes de mises en oeuvre de l'invention.

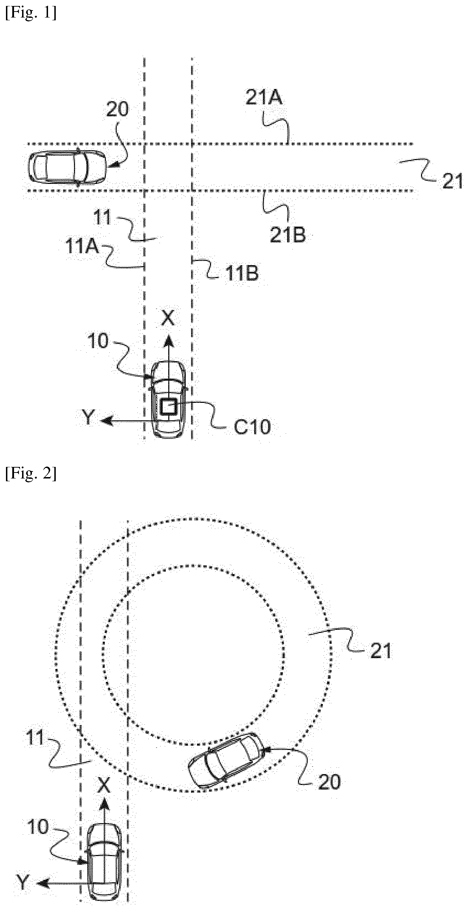

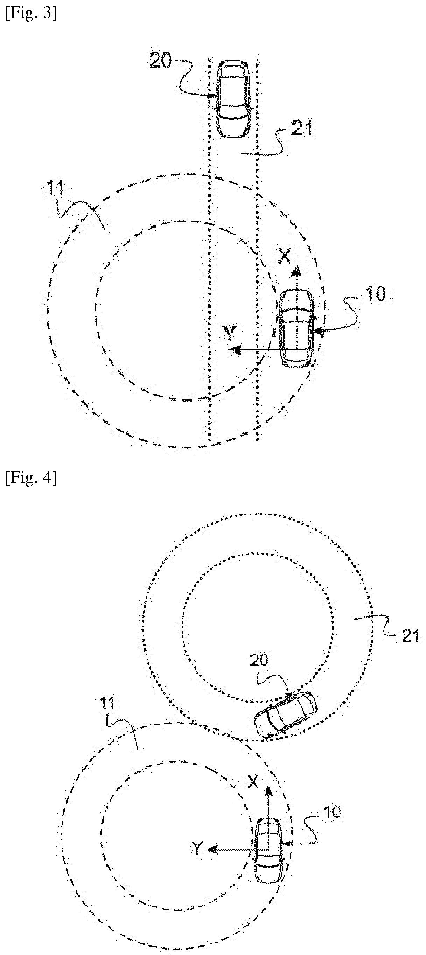

Sur les figures 1 à 5, on a représenté un véhicule automobile roulant sur une route sur laquelle se trouve des « objets » formant des obstacles potentiels pour le véhicule automobile. Ici, ces objets sont formés par des voitures (appelés « véhicules tiers 20 »). En variante, il pourrait s'agir d'autres types d'objets (piétons, cyclistes, infrastructures routières...). Les objets considérés pourront aussi bien être mobiles qu'immobiles.

Dans la suite de la description, pour bien distinguer le véhicule automobile mettant en oeuvre la présente invention des véhicules tiers 20, on parlera de « véhicule EGO 10 ».

Ce véhicule EGO 10 comprend classiquement un châssis qui délimite un habitacle, des roues dont deux au moins sont directrices, un groupe motopropulseur, un système de freinage et un système de direction permettant d'agir sur l'orientation des roues directrices.

Dans l'exemple considéré, le système de direction est commandé par un actionneur de direction assistée qui permet d'agir sur l'orientation des roues directrices en fonction de l'orientation du volant et/ou, selon les cas, en fonction d'une consigne émise par un calculateur C10.

Le système de freinage est commandé par un actionneur de freinage qui permet d'agir sur les freins des roues en fonction de l'appui sur la pédale de frein du véhicule EGO 10 et/ou, selon les cas, en fonction d'une consigne émise par le calculateur C10.

Le calculateur C10 est embarqué dans le véhicule EGO 10.

Il comporte au moins un processeur, au moins une mémoire et différentes interfaces d'entrée et de sortie.

Grâce à ses interfaces d'entrée, le calculateur C10 est adapté à recevoir des signaux d'entrée provenant de différents capteurs.

Parmi ces capteurs, il est par exemple prévu :
- un dispositif tel qu'une caméra frontale, permettant de repérer la position du véhicule EGO par rapport à sa voie de circulation,
- un dispositif tel qu'un télédétecteur RADAR ou LIDAR, permettant de détecter un objet se trouvant sur la trajectoire du véhicule EGO 10,
- au moins un dispositif latéral tel qu'un télédétecteur RADAR ou LIDAR, permettant d'observer l'environnement sur les côtés du véhicule EGO.

En complément, le calculateur C10 pourrait recevoir des informations de la part d'autres capteurs (capteur de vitesse, capteur GPS...) ou même d'autres entités (typiquement de la part d'autres véhicules ou de la part d'infrastructures routières communicantes).

Ici, on considérera par simplification que le calculateur C10 reçoit toutes ses données des capteurs du véhicule EGO 10, et qu'il reçoit ainsi :
- la position du véhicule EGO10 et des caractéristiques dynamiques de ce véhicule EGO (vitesse & accélération), et
- la position des véhicules tiers 20 et des caractéristiques dynamiques de ces véhicules tiers 20.

De manière classique, les données reçues par le calculateur C10 depuis plusieurs capteurs sont combinées ensemble de façon à fournir des données fusionnées fiables.

Grâce à ses interfaces de sortie, le calculateur C10 est adapté à transmettre une consigne à l'actionneur de direction assistée et à l'actionneur de freinage.

Grâce à sa mémoire, le calculateur C10 mémorise des données utilisées dans le cadre du procédé décrit ci-dessous.

Il mémorise notamment une application informatique, constituée de programmes d'ordinateur comprenant des instructions dont l'exécution par le processeur permet la mise en oeuvre par le calculateur du procédé décrit ci-après.

Ces programmes comportent notamment un « logiciel AEB » qui permet de commander l'arrêt automatique du véhicule EGO 10 en agissant sur les freins afin d'éviter que le véhicule EGO 10 ne vienne percuter un quelconque objet.

Ils comportent également un « logiciel AES » qui est conçu pour calculer une trajectoire d'évitement d'objet et pour piloter le véhicule EGO 10 de manière qu'il suive cette trajectoire ou pour aider le conducteur à piloter le véhicule EGO 10 de manière qu'il suive cette trajectoire.

Ces logiciels AEB et AES étant bien connu de l'Homme de l'art, ils ne seront pas décrits ici plus en détail.

Ici, le calculateur C10 est programmé pour mettre en oeuvre un procédé d'évitement d'obstacles se trouvant dans l'environnement du véhicule EGO 10.

Ce procédé comporte trois opérations principales, à savoir :
- une première opération de caractérisation de l'environnement, qui permet de détecter tout danger en calculant une valeur de durée-avant-collision TTC pour chaque objet potentiellement dangereux pour le véhicule EGO 10, puis si la plus petite des valeurs de durée-avant-collision TTC calculées passe sous un seuil prédéterminé et qu'un risque de collision imminente est donc détecté,
- une deuxième opération de calcul d'une consigne de pilotage de l'un au moins des actionneurs de direction assistée et de freinage, et
- une troisième opération d'activation de cet actionneur afin d'éviter que le véhicule EGO 10 ne percute l'objet 20.

On peut alors décrire ces trois opérations, et plus particulièrement la première sur laquelle porte plus spécifiquement la présente invention.

Cette première opération est mise en oeuvre en plusieurs étapes successives qui sont répétées en boucle avec un pas de temps total Δt qui est ici fixe et égal à 40 ms.

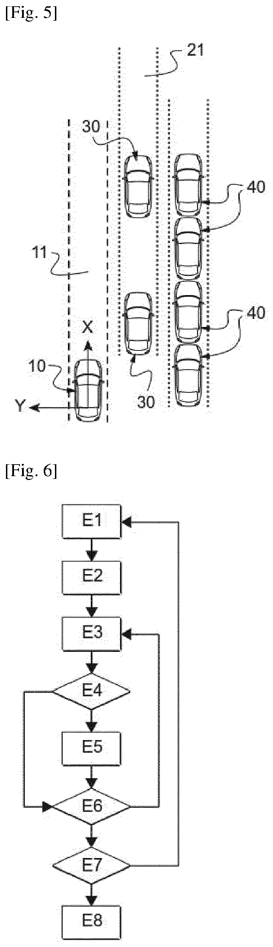

Comme le montre la [Fig.6], la première étape E1 consiste à détecter les objets situés au voisinage du véhicule EGO 10.

Cette première étape est bien connue de l'Homme du métier et ne sera pas ici décrite. On considérera ici qu'elle permet au calculateur C10 de positionner les objets détectés sur une carte 2D de l'environnement proche du véhicule automobile.

Dans les exemples des figures 1 à 4, on considérera que seul un véhicule tiers 20 est détecté. Dans l'exemple de la [Fig.5], on considérera que deux véhicules tiers 30 mobiles sont détectés, et que quatre véhicules tiers 40 immobiles garés sur le côté de la chaussée sont également détectés.

Au cours d'une seconde étape E2, le calculateur C10 acquiert des données caractérisant la dynamique du véhicule EGO 10 et celle du ou des véhicules tiers 20, 30, 40 détectés.

En pratique, ces données comportent par exemple le vecteur vitesse et le vecteur accélération du véhicule EGO 10 et du ou des véhicules tiers 20, 30, 40 détectés.

Au cours d'une troisième étape E3, le calculateur C10 réalise un filtrage pour chaque objet détecté (ici les véhicules tiers 20, 30, 40) afin de ne procéder aux calculs subséquents (notamment au calcul de la durée-avant-collision TTC) que pour les objets qui sont potentiellement dangereux pour le véhicule EGO 10. Cette troisième étape est réalisée en tenant compte uniquement des trajectoires des objets détectés et de celles du véhicule EGO 10.

Pour cela, le véhicule EGO 10 ainsi que le ou les véhicules tiers 20, 30, 40 sont chacun modélisés sous la forme d'une figure géométrique simple. Il pourrait s'agir d'un cercle, d'un ovale, d'un carré... Ici, il s'agit plutôt d'un rectangle. Les dimensions de ce rectangle peuvent être standardisées (par exemple deux mètres de largeur sur trois mètres de longueur) ou peuvent être déterminées en fonction des données relevées par les capteurs RADAR.

La troisième étape est alors successivement mise en oeuvre pour chacun des objets détectés.

Le calculateur C10 considère alors un premier des objets (ici le véhicule tiers 20, 30 le plus proche).

Il détermine alors la trajectoire prévisionnelle 11 du véhicule EGO 10 et la trajectoire prévisionnelle 21 de ce premier véhicule tiers 20, 30.

Ce calcul de trajectoire est par exemple réalisé dans le repère (X, Y) du véhicule EGO 10, où l'abscisse X se confond avec l'axe longitudinal du véhicule et l'ordonnée Y s'étend vers la gauche du véhicule.

Cette étape est réalisée à l'aide d'une modélisation de trajectoire permettant de simplifier les calculs.

A titre d'exemple, il est possible d'utiliser un modèle d'évolution à vitesse constante, selon lequel la trajectoire prévisionnelle 11, 21 de chaque véhicule est déduite du vecteur vitesse de ce véhicule, en considérant que ce vecteur vitesse ne va pas évoluer dans les prochaines secondes.

En variante, il est possible d'utiliser un modèle d'évolution à courbure constante et accélération nulle, selon lequel la trajectoire prévisionnelle 11, 21 de chaque véhicule est déduite du vecteur vitesse de ce véhicule, en considérant que la norme de ce vecteur vitesse ne va pas évoluer dans les prochaines secondes et que la direction de ce vecteur vitesse va continuer à évoluer à vitesse constante dans les prochaines secondes.

Encore en variante, il est possible d'utiliser un modèle d'évolution à courbure et accélération constantes, selon lequel la trajectoire prévisionnelle 11, 21 de chaque véhicule est déduite du vecteur vitesse et du vecteur accélération de ce véhicule.

D'autres variantes seraient bien entendu envisageables.

Ici, la trajectoire prévisionnelle 11 du véhicule EGO et celle du premier véhicule tier 20, 30 sont modélisées chacune par deux lignes 11A, 11B, 21A, 21B passant par deux côtés opposés du rectangle (les deux côtés les plus longs).

L'idée consiste à modéliser les trajectoires empruntées par les deux côtés des véhicules, de façon à définir un couloir qui sera celui dans lequel on estime que le véhicule évoluera dans les prochaines secondes.

Les deux lignes 11A, 11B, 21A, 21B sont, compte tenu de la modélisation choisie et des caractéristiques dynamiques des véhicules :
- soit des segments de droites parallèles (voire des droites parallèles),
- soit arcs-de-cercles coaxiaux (voire des cercle coaxiaux).

En pratique, si le résultat de la modélisation indique que le véhicule (EGO ou tiers) suit une trajectoire rectiligne, les deux lignes seront des segments de droites parallèles.

En revanche, si le résultat de la modélisation indique que le véhicule (EGO ou tiers) suit une trajectoire courbe, les deux lignes seront des arcs-de-cercles coaxiaux.

On utilisera ici plutôt des segments de droites que des droites puisque la trajectoire prévisionnelle sera calculée à une échéance limitée, par exemple de 4 s. Ces segments de droites s'étendront alors depuis le véhicule vers l'avant de celui-ci, sur une longueur correspondant à la distance que le véhicule parcourra en 4 s.

De la même manière et pour la même raison, on utilisera ici plutôt des arcs-de-cercles que des cercles. Ces arcs-de-cercles s'étendront alors depuis le véhicule vers l'avant de celui-ci, sur un secteur angulaire correspondant à l'abscisse curviligne que le véhicule parcourra en 4 s.

Dans une autre variante de l'invention, la trajectoire prévisionnelle pourrait être déduite par exemple de la forme de la route empruntée. Par exemple, si le véhicule est en entrée de virage, cette trajectoire pourrait être modélisée en plusieurs parties situées dans le prolongement les unes des autres, par exemple une partie rectiligne qui se prolonge en une première partie en arc-de-cercle de grand rayon de courbure puis une troisième partie en arc-de-cercle de rayon de courbure moindre.

On notera ici que si un objet détecté est immobile, sa trajectoire prévisionnelle sera formée par sa seule figure géométrique, ici rectangulaire.

Une fois le calcul des trajectoires prévisionnelles effectué, il est prévu de filtrer le premier véhicule tiers 20, 30 (étape E4 de la [Fig.6]). L'idée consiste à ne retenir ce premier véhicule tiers dans la suite du procédé qu'à condition que sa trajectoire coupe celle du véhicule EGO 10. Dans le cas contraire, puisque ce véhicule tiers ne présente aucun danger, il n'est plus pris en compte dans la suite des calculs.

On notera que ce filtrage ne tient pas compte du moment auquel les trajectoires se coupent si bien qu'il n'est pas tenu compte du fait qu'un risque d'accident est avéré ou non. Il s'agit donc d'un filtrage intemporel (non dépendant du temps) et géométrique.

En pratique, le calculateur C10 vérifie donc ici uniquement si l'une au moins des deux lignes 11A, 11B de la trajectoire prévisionnelle 11 du véhicule EGO 10 intersecte (c'est-à-dire croise) l'une au moins des deux lignes 21A, 21B de la trajectoire prévisionnelle 21 du véhicule tiers 20 considéré.

Dans les exemples illustrés sur les figures 1 à 4, les véhicules tiers 20 sont donc retenus pour la suite du procédé. En revanche, dans l'exemple illustré sur la [Fig.5], aucun des véhicules tiers 30, 40 n'est retenu.

A ce stade, si l'objet considéré (ici le premier véhicule tiers 20) présente une trajectoire prévisionnelle 21 qui ne croise pas celle du véhicule EGO 10, le procédé passe directement à l'étape E6.

En revanche, si l'objet considéré (ici le premier véhicule tiers 20) présente une trajectoire prévisionnelle 21 qui croise celle du véhicule EGO 10, il est prévu de calculer la valeur de durée-avant-collision TTC associée à cet objet au cours d'une étape E5.

A l'aide de la modélisation de trajectoire précitée, le calculateur C10 va être en mesure de déterminer le moment du possible impact entre l'objet et le véhicule EGO 10.

Divers types de calculs pourraient être employés pour déterminer cet instant.

Ici, le calcul consiste à prévoir, compte tenu de la modélisation précitée, les positions successives qu'occuperont le véhicule EGO 10 et l'objet considéré (ici le premier véhicule tiers 20) dans un futur proche (ici limité à 4 secondes). Ces positions sont calculées avec un pas de discrétisation de 1 ms. Ce calcul permet ainsi de détecter, à 1ms près, l'instant où le véhicule EGO 1 pourrait percuter le premier véhicule tiers 20 en déterminant le moment où les positions relatives de ces deux éléments seront telles que leurs figures représentatives (rectangles) se superposent en partie (c'est-à-dire s'intersectent).

Une fois ce calcul de valeur de temps-avant collision TTC réalisé pour le premier véhicule tiers, le procédé se poursuit en une étape E6.

Cette étape E6 consiste à déterminer s'il reste des objets présents dans l'environnement du véhicule EGO 10 qui n'ont pas encore été traités.

Dans le cas des figures 1 à 4, puisque seul un objet a été détecté, le processus se poursuit par l'étape E7. En revanche, dans le cas de la [Fig.5], la troisième étape se répète pour un deuxième des objets détectés.

L'étape E6 va donc permettre de calculer les valeurs de temps-avant collision TTC pour tous les objets détectés dont les trajectoires coupent celle du véhicule EGO 10, et seulement pour ces objets.

Ensuite, le calculateur C10 peut mettre en oeuvre la seconde opération.

Lors de cette seconde opération, le calculateur met en oeuvre une étape E7 pour déterminer si l'une des valeurs de durée-avant-collision TTC est inférieure à un seuil prédéterminé, par exemple de 2 secondes. Ce seuil peut bien entendu être différent ou même variable en fonction des conditions de circulation (météo, vitesse du véhicule EGO...).

Tant que la plus petite de ces valeurs reste supérieure à ce seuil, aucune action n'est entreprise, et le procédé se répète en boucles toutes les 40 ms, depuis l'étape E1.

En revanche, dans le cas contraire, au cours d'une étape E8, le calculateur C10 procède au calcul des consignes de pilotage de l'un au moins des deux actionneurs de direction assistée et de freinage.

Selon la configuration dans laquelle le véhicule EGO 10 se trouve, la fonction AEB ou la fonction AES sera pour cela déclenchée.

Si la fonction AEB est déclenchée, la consigne consiste en une requête de freinage d'urgence.

En revanche, si la fonction AES est déclenchée, la consigne consiste en une requête de braquage des roues directrices.

Dans cette éventualité, il est prévu de calculer une trajectoire d'évitement du véhicule tiers 20 associé à la plus petite valeur de durée-avant-collision TTC. Puis il est prévu de calculer une consigne de braquage des roues directrices de manière à ce que le véhicule EGO puisse suivre cette trajectoire d'évitement.

Lors de la troisième opération, le calculateur C10 envoie la ou les consignes à ou aux actionneur(s) de direction assistée et de freinage, de façon à ce que le véhicule freine et/ou change de trajectoire afin d'éviter le danger.

La présente invention n'est nullement limitée au mode de réalisation décrit et représenté, mais l'homme du métier saura y apporter toute variante conforme à l'invention.

En particulier, le calculateur pourrait réaliser un calcul relatif dans le repère du véhicule EGO, en considérant que ce dernier est fixe et que les objets bougent à des vitesses relatives par rapport à lui.

Selon une autre variante de l'invention, on pourrait, pour déterminer si les trajectoires prévisionnelles des véhicules tiers coupent celle du véhicule EGO, considérer pour chacun de ces véhicules une seule ligne (droite ou en arc-de-cercle) puis déterminer si ces lignes s'approchent à une distance l'une de l'autre d'un écart inférieur à la somme de la demi-diagonale du rectangle du véhicule EGO et de la demi-diagonale du rectangle du véhicule tiers.

Selon une autre variante de l'invention, on pourra mettre en oeuvre deux fois les étapes E3 et suivantes, en parallèle et de façon redondante, en considérant deux modèle de trajectoire différents. En effet, certains modèles sont plus fiables que d'autres dans certaines circonstances, et inversement. Cette redondance assurera alors les meilleurs résultats.

## Revendications

1. Procédé de détection d'un danger dans l'environnement d'un véhicule automobile (10), comportant des étapes de :
- acquisition de données caractérisant la position et la dynamique du véhicule automobile (10),
- détection d'objets (20) situés dans l'environnement du véhicule automobile (10),
- acquisition de données caractérisant la position et la dynamique de chaque objet (20) détecté,
- pour au moins un des objets (20) détectés, calcul par un calculateur du véhicule automobile (10), en fonction des données acquises, d'une valeur de durée-avant-collision (TTC) relative au temps nécessaire pour que ledit objet (20) et le véhicule automobile (10) se percutent,
**caractérisé en ce que**, avant l'étape de calcul, il est prévu une étape de détermination de trajectoires prévisionnelles (11, 21) du véhicule automobile (10) et dudit au moins un objet (20) détecté, en fonction des données acquises, et
**en ce que**, à l'étape de calcul, la valeur de durée-avant-collision (TTC) est calculée uniquement si la trajectoire prévisionnelle (21) dudit au moins un objet (20) détecté croise la trajectoire prévisionnelle (11) du véhicule automobile (10).

2. Procédé de détection selon la revendication précédente, dans lequel, à l'étape de détermination, le véhicule automobile (10) et chaque objet (20) détecté sont modélisés sous la forme de figures géométriques, et chacune des trajectoires prévisionnelles (11, 21) est modélisée par deux lignes (11A, 11B, 21A, 21B) passant par deux côtés opposés de la figure géométrique correspondante.

3. Procédé de détection selon la revendication précédente, dans lequel les figures géométriques sont des rectangles.

4. Procédé de détection selon l'une des deux revendications précédentes, dans lequel la trajectoire prévisionnelle (21) de chaque objet (20) détecté est considérée comme croisant la trajectoire prévisionnelle (11) du véhicule automobile (10) si l'une au moins des deux lignes (11A, 11B) de la trajectoire prévisionnelle (11) du véhicule automobile (10) intersecte l'une au moins des deux lignes (21A, 21B) de la trajectoire prévisionnelle (21) de l'objet (20).

5. Procédé de détection selon l'une des trois revendications précédentes, dans lequel lesdites deux lignes (11A, 11B, 21A, 21B) comprennent des droites ou segments de droites parallèles, ou encore des cercles ou arcs-de-cercles coaxiaux, selon les données acquises.

6. Procédé de détection selon la revendication précédente, dans lequel si les deux lignes (11A, 11B, 21A, 21B) comprennent des segments de droites parallèles, les segments de droites présentent une longueur qui dépend de la vitesse du véhicule automobile (10) ou de l'objet (20) correspondant.

7. Procédé de détection selon l'une des deux revendications précédentes, dans lequel si les deux lignes (11A, 11B, 21A, 21B) comprennent des arcs-de-cercles coaxiaux, les arcs-de-cercles s'étendent sur un secteur angulaire qui dépend de la vitesse du véhicule automobile (10) ou de l'objet (20) correspondant.

8. Procédé de pilotage d'un véhicule automobile (10), comportant :
- une première opération au cours de laquelle un calculateur (C10) du véhicule automobile (10) met en oeuvre un procédé de détection conforme à l'une des revendications précédentes, puis, si la plus petite des valeurs de durée-avant-collision calculées passe sous un seuil prédéterminé,
- une seconde opération d'activation d'au moins un actionneur du véhicule automobile (10) afin d'éviter que le véhicule automobile (10) ne percute l'objet (20) associé à la plus petite des valeurs de durée-avant-collision calculées.

9. Procédé de pilotage selon la revendication précédente, dans lequel au cours de la seconde opération, il est prévu de calculer une trajectoire d'évitement dudit objet (20), et dans lequel ledit actionneur permet de contrôler la direction du véhicule automobile (10).

10. Véhicule automobile (10) comportant des roues, des moyens de freinage des roues équipés d'un premier actionneur, un système de direction comportant un deuxième actionneur adapté à contrôler l'orientation d'une partie au moins des roues, lesdits actionneurs étant commandés par un calculateur (C10), **caractérisé en ce que** le calculateur (C10) est adapté à mettre en oeuvre un procédé de pilotage conforme à l'une des deux revendications précédentes.
